# EUROPEAN PATENT APPLICATION

(11) **EP 3 862 900 A1**
(43) Date of publication of application: **11.08.2021**
(21) Application number: 20191001.5
(22) Date of filing: 13.08.2020
(51) Int. Cl.: G06F 21/46

(54) **MODULE-BASED DYNAMIC PASSWORDS**

(30) Priority: 04.02.2020 US 202016781948
(71) Applicant: FUJITSU LIMITED, Kanagawa 211-8588 (JP)
(72) Inventor: TSOU, I-wen, Sunnyvale, California 94085 (US)
(74) Representative: Haseltine Lake Kempner LLP

(57) **Abstract**

A method may include providing an interface to a user device. The interface may include a field to select to create a dynamic password configured to automatically change based on one or more pieces of real-time data. The method may include presenting a plurality of dynamic password templates to the user on the interface. Each dynamic password template may include a combination of one or more modules that are each based on a corresponding particular piece of real-time data and that each indicate the corresponding real-time information. The method may include receiving input selecting a dynamic password template of the plurality of dynamic password templates. The method may include receiving a set of fixed characters from the user. The method may include obtaining a combination of the set of fixed characters with the selected dynamic password template as the dynamic password.

## Description

### FIELD

The embodiments discussed in the present disclosure are related to module-based dynamic passwords.

### BACKGROUND

Passwords are a common element of daily life. However, passwords need to be changed frequently to maintain security, which may be a time-consuming and/or cumbersome process, leading individuals to maintain the same passwords over time, jeopardizing the security a password should provide.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

A method may include providing an interface to a user device. The interface may include a field to select to create a dynamic password configured to automatically change based on one or more pieces of real-time data. The method may include receiving input selecting to create the dynamic password. The method may include presenting a plurality of dynamic password templates to the user on the interface in response to receiving the input selecting to create the dynamic password. Each dynamic password template may include a combination of one or more modules that are each based on a corresponding particular piece of real-time data and that each indicate the corresponding real-time information. The method may include receiving input selecting a dynamic password template of the plurality of dynamic password templates. The method may include receiving a set of fixed characters from the user. The method may include obtaining a combination of the set of fixed characters with the selected dynamic password template as the dynamic password.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to module-based dynamic passwords;
FIG. 2 illustrates an example password database;
FIG. 3 is a flowchart of an example process of generating static and dynamic passwords;
FIG. 4 is a flowchart of an example process of validating static and dynamic passwords;
FIG. 5 is a flowchart of an example method of generating a dynamic password; and
FIG. 6 illustrates an example computing system that may be configured to generate a dynamic password.

### DESCRIPTION OF EMBODIMENTS

Some embodiments described in the present disclosure relate to methods and systems of generating module-based dynamic passwords. Passwords are frequently used to gain access to secure environments and/or to process transactions. For example, an individual may enter a password to unlock a door, such as a front door to enter the individual's home. Additionally or alternatively, an individual may enter a password to connect to a network, to sign in to a user account, to engage in a transaction, or for other purposes. Using the same password for multiple purposes may reduce the security of the password. Additionally, maintaining the same password for a long duration of time may reduce the security of the password. However, it may be difficult for a user to remember to change passwords frequently, to use different passwords for different applications, and/or to create passwords that are difficult to break.

A module-based dynamic password may enable a user to create a password that frequently changes based on criteria that are easy for the user to remember. By selecting different modules or templates, a user may create a password that changes based on the time of day, the date, the temperature, the duration of a stay, the number of guests, and/or other factors that the user may choose. Such a module-based password may be more difficult for an outsider to guess and/or predict as the password may change throughout the day, throughout the year, and/or as conditions change. Additionally or alternatively, in some embodiments, the module-based dynamic password may allow a user to give out a password at a particular time to allow temporary access to an environment. The same password may not grant access at a different time even without the user setting or changing the password.

Additionally or alternatively, in some environments, a potential intruder may identify clues as to the password associated with a device. For example, a garage door or a front door might have a number pad for entry of a code to unlock and/or open the associated door. Using a static password may result in more wear and/or markings on the numbers associated with the password. Thus, the potential intruder may be able to identify the numbers that are part of the password and use that information to obtain access. Using a module-based dynamic password, the password may be easy to remember and may use all the different numbers, resulting in more even wear of the keys and preventing the potential intruder from gleaning any information about the password.

In some embodiments, a module-based dynamic password may be used together with static passwords such that a potential intruder is unaware of whether a given password is dynamic or static. For example, embodiments of the present disclosure may allow a user to enter a password or a user name and a password without disclosing whether the password is a static password or a dynamic password.

Embodiments of the present disclosure are explained with reference to the accompanying drawings.

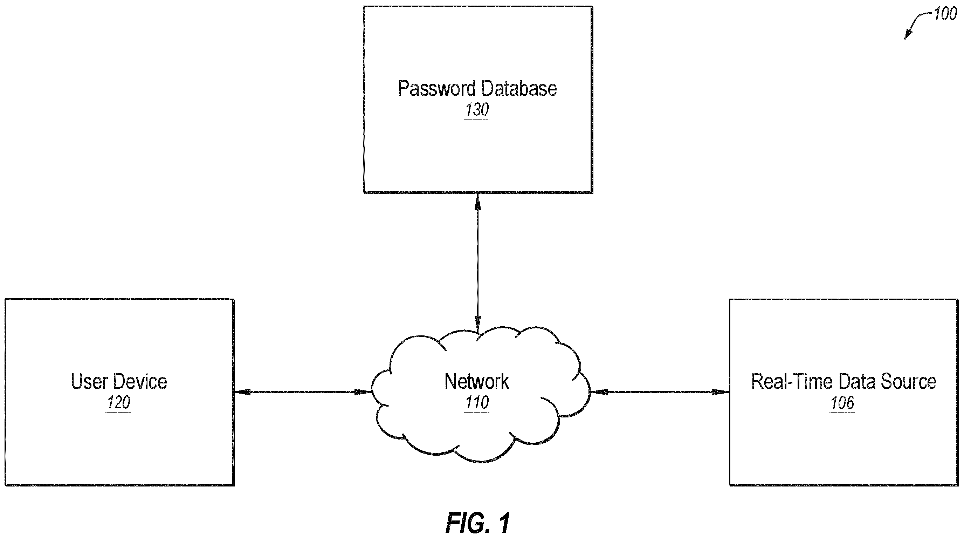

FIG. 1 is a diagram representing an example environment 100 related to module-based dynamic passwords, arranged in accordance with at least one embodiment described in the present disclosure. The environment 100 may include a network 110, a user device 120, a password database 130, and a real-time data source 140.

The network 110 may include any communication network configured for communication of signals between any of the components (e.g., the user device 120 and the password database 130) of the environment 100. The network 110 may be wired or wireless. The network 110 may have numerous configurations including a star configuration, a token ring configuration, or another suitable configuration. Furthermore, the network 110 may include a local area network (LAN), a wide area network (WAN) (e.g., the Internet), and/or other interconnected data paths across which multiple devices may communicate. In some embodiments, the network 110 may include a peer-to-peer network. The network 110 may also be coupled to or include portions of a telecommunications network that may enable communication of data in a variety of different communication protocols.

In some embodiments, the network 110 includes or is configured to include a BLUETOOTH® communication network, a Z-Wave® communication network, an Insteon® communication network, an EnOcean® communication network, a wireless fidelity (Wi-Fi) communication network, a ZigBee communication network, a HomePlug communication network, a Power-line Communication network, a message queue telemetry transport (MQTT) communication network, a MQTT-sensor (MQTT-S) communication network, a constrained application protocol (CoAP) communication network, a representative state transfer application protocol interface (REST API) communication network, an extensible messaging and presence protocol (XMPP) communication network, a cellular communications network, any similar communication networks, or any combination thereof for sending and receiving data. The data communicated in the network 110 may include data communicated via short messaging service (SMS), multimedia messaging service (MMS), hypertext transfer protocol (HTTP), direct data connection, wireless application protocol (WAP), e-mail, smart energy profile (SEP), ECHONET Lite, OpenADR, or any other protocol that may be implemented with the user device 120, the password database 130, the real-time data source 140, a cloud server communication, or a gateway.

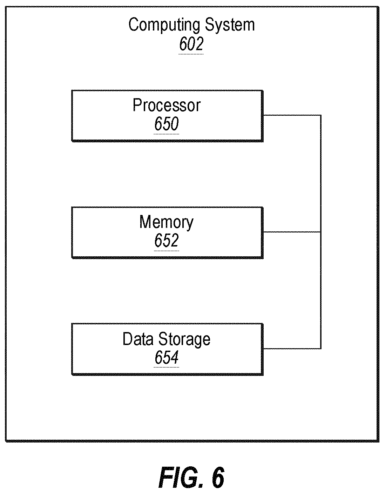

The user device 120 may include a computer-based hardware device that includes a processor, memory, and communication capabilities. The user device 120 may be coupled to the network 110 to communicate data with any of the other components of the environment 100. Some examples of the user device 120 may include a mobile phone, a smartphone, a tablet computer, a laptop computer, a desktop computer, a set-top box, a virtual-reality device, an electronic lock on a door, or a connected device, etc. The user device 120 may include a processor-based computing device. For example, the user device 120 may include a hardware server or another processor-based computing device configured to function as a server. The user device 120 may include memory and network communication capabilities. In some embodiments, the user device 120 may include a computing system such as described below with respect to FIG. 6.

In some embodiments, the user device 120 may include one or more software programs that may allow a user to create a user name and/or a password, to enter a user name and/or a password, or to provide a connection to another device and/or software program to allow the user to create a user name and/or a password or to enter a user name and/or a password. For example, the user device 120 may include a display and may present a graphical user interface on the display. A user may use one or more input devices such as, for example, a mouse, a keyboard, a touchscreen, etc., to select to create a user name and to select to create a password. The user device 120 may present multiple options to a user via a display such as an option to create a dynamic password and an option to create a static password. In response to receiving input selecting the creation of a dynamic password, the user device 120 may present multiple dynamic password templates to the user. Each dynamic password template may include a combination of one or more modules that may each correspond with particular pieces of real-time information. For example, a dynamic password template may include a date option module. For example, the date may be in the form of a month, a day of the month, and a year. In this example, the date option module of the dynamic password template may be MMDDYYYY, where MM represents a two-digit representation of the month (for example, 01 for January, 06 for June, and 11 for November), DD represents a two-digit representation of the day in the month (for example, 03 for the third day), and YYYY represents the year. In these and other examples of dynamic password templates, the matching password at the time of entry of a password attempt would be the current values corresponding to the dynamic password template. For example, when attempting to enter a password on January 6, 2020, the matching values for the dynamic password template MMDDYYYY would be 01062020.

Additional examples of modules of dynamic password templates include representations of the number of guests and the duration of a stay. For example, a hotel or other lodging may set a password (such as a password for an electronic door lock) based on the number of guests and the duration of a stay for the current guest. Thus, a dynamic password template module may include NG, a two-digit representation of the number of guests associated with a lodging reservation, and NN, a two-digit representation of the number of nights associated with a lodging reservation.

Additionally or alternatively, modules of dynamic password templates may include current temperatures, the current time, the current day of the week, or other real-time variables that may be determined. Additionally or alternatively, the dynamic password template modules may include non-numeric representations of the real-time data associated with the dynamic password templates. For the date example discussed above, the dynamic password template module may be MMMDDYYYY, where MMM represents a three letter abbreviation of the month in capital letters, such as JAN for the month January. Alternatively or additionally, the dynamic password template module may include the full term of a month of another key word, such as monthDDYYYY, dayofweekDDYYYY, or any other term.

As indicated above, the dynamic password templates may include a combination of one or more modules. For example, in some embodiments, the "combination" of one or more modules may include a single module (e.g., a single date module) such that the dynamic password template may be the single module. In these or other embodiments, the dynamic password templates may include multiple modules such as a date module concatenated with a time module. Additionally or alternatively, the dynamic password templates may include various permutations of different combinations of different modules. For example, a first dynamic password template may include a concatenation of a date module followed by a time module and a second dynamic password template may include a concatenation of a time module followed by a date module. As another example, different dynamic password templates may be generated for up to six different permutations of three different modules.

In some embodiments, the user device 120 may not present the user with any dynamic password templates. In these and other embodiments, the user may enter a set of dynamic characters. For example, the user may enter characters such as those listed above relative to the dynamic password templates. For example, the user may enter MDMD, where the first M is the first digit of the current month, the first D is the first digit of the current date, the second M is the second digit of the current month, and the second D is the second digit of the current date, MYYM, where the first M is the first digit of the current month, YY is a two-digit representation of the current year, and the second M is the second digit of the current month, or any other combination of letters to create a customized arrangement of dynamic characters.

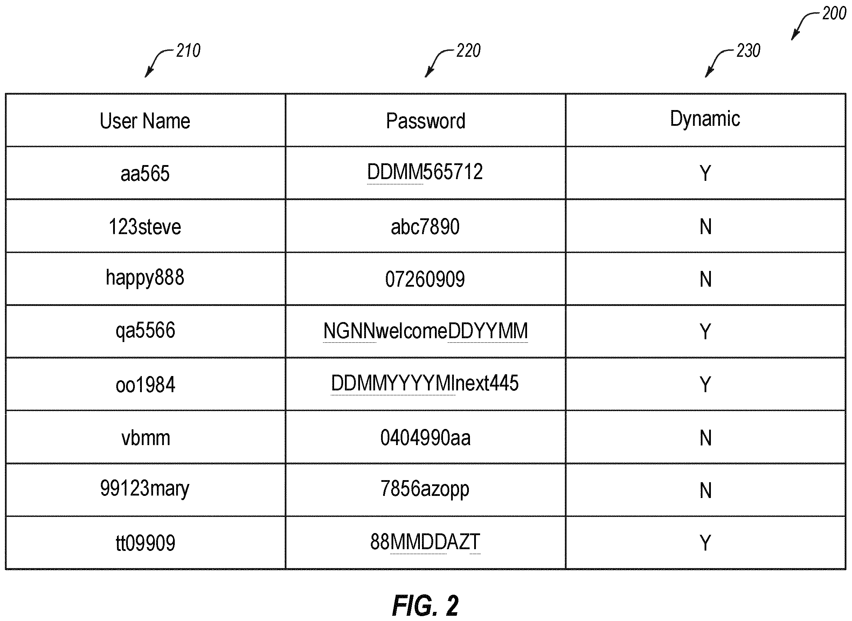

In some embodiments, the user device 120 may also present a user with the option to add one or more static characters to a password including the dynamic password template. For example, the user may enter additional numbers, letters, and/or symbols before the dynamic password template, after the dynamic password template, and/or between dynamic password templates. For example, the user may select to create a dynamic password of NGNNwelcomeDDYYMM, where underlining represents dynamic password templates and the plain text "welcome" represents static characters between dynamic password templates. Additional examples are included in FIG. 2.

After the completion of the creation of either a dynamic password or a static password, the user device 120 may send the created password to the password databased 130 via the network 110 together with an indication of whether the password is a dynamic password or a static password.

The password database 130 may include a computer-based hardware device that includes a processor, memory, and communication capabilities. The password database 130 may be coupled to the network 110 to communicate data with any of the other components of the environment 100. Some examples of the password database 130 may include a mobile phone, a smartphone, a tablet computer, a laptop computer, a desktop computer, a set-top box, a virtual-reality device, an electronic lock on a door, or a connected device, etc. The password database 130 may include a processor-based computing device. For example, the password database 130 may include a hardware server or another processor-based computing device configured to function as a server. The password database 130 may include memory and network communication capabilities. In some embodiments, the password database 130 may include a computing system such as described below with respect to FIG. 6.

In some embodiments, the password database 130 may include a database of multiple user names together with a password associated with each user name and an indication of whether the password is a dynamic password. In some embodiments, the password database 130 may be encrypted to prevent unauthorized access to the password database 130 and/or prevent unintentional disclosure of information in the password database 130. In some embodiments, the password database 130 may not include any user names and may only include passwords and indicators of whether a corresponding password is a dynamic password or a static password. Alternatively or additionally, in some embodiments, the password database 130 may include a single password. For example, in some embodiments, the password database 130 may be associated with an electronic lock on a door of a house. The password database 130 may not include a user name and may only include a single password corresponding to the electronic lock. Alternatively, the password database 130 may be associated with access to an electronic banking system and may include hundreds of user names, thousands of user names, millions of user names, or any number of user names together with corresponding passwords and indicators.

The password database 130 may be configured to obtain user names, passwords, and/or indicators from the user device 120. For example, in some embodiments, the password database 130 may be configured to operate as a server system that hosts a website that may be provided to and presented on the user device 120. The website may include an interface that may include a field to select to create a dynamic password. In these or other embodiments, the interface may be configured to receive the input selecting to create the dynamic password such that the password database 130 may receive the input selecting to create the dynamic password. In these or other embodiments, the password database 130 may provide, via the website, the dynamic password templates to the user device 120 such that the user device may present the dynamic password templates on the interface of the website. Additionally or alternatively, the interface may include one or more other fields that may be configured to receive input to select one or more of the dynamic password templates. In these or other embodiments, the password database 130 may be configured to receive, from the user device 120 via interaction with the website, input selecting one or more of the dynamic password templates in response to the user device 120 receiving input that may select one or more corresponding fields. The password database 130 may also receive any other applicable input via the interface of the website. Additionally or alternatively, the password database 130 may obtain the dynamic password through the creation of the dynamic password based on the received input and/or by receiving the dynamic password from the user device 120.

In some embodiments, the password database 130 may encrypt the obtained user names, passwords, and/or indicators and may store the encrypted information in a storage. In some embodiments, the password database 130 may also be configured to receive password attempts and/or determine whether a received user name and password attempt match a user name and password in the password database 130. In determining whether the user name and password attempt match an existing user name and password, the password database 130 may determine whether the user name entered corresponds with a dynamic password. For example, the password database 130 may identify an entry in the password database 130 corresponding to the entered user name. If the entry includes an indication that the user name and/or password correspond with a dynamic password, the password database 130 may obtain real-time information associated with any dynamic password templates from the real-time data source 140 via the network 110. For example, if the dynamic password is 123DDMMabc and includes a dynamic password template DDMM and the current day and month is June 22, the password database 130 may map the real-time information 2206 into the dynamic password to obtain the current password 1232206abc.

The real-time data source 140 may include a computer-based hardware device that includes a processor, memory, and communication capabilities. The real-time data source 140 may be coupled to the network 110 to communicate data with any of the other components of the environment 100. Some examples of the real-time data source 140 may include a mobile phone, a smartphone, a tablet computer, a laptop computer, a desktop computer, a set-top box, a virtual-reality device, an electronic lock on a door, or a connected device, etc. The password database 130 may include a processor-based computing device. For example, the password database 130 may include a hardware server or another processor-based computing device configured to function as a server. The real-time data source 140 may include memory and network communication capabilities. In some embodiments, the real-time data source 140 may include a computing system such as described below with respect to FIG. 6.

In some embodiments, the real-time data source 140 may include different sensors and/or devices to gather real-time data. For example, the real-time data source 140 may include thermometers, thermocouples, barometers, anemometers, photometers, clocks, or any other device that may measure a real-time variable. For example, in instances in which the user device 120 includes dynamic password templates that reference temperatures, the real-time data source 140 may include a thermometer to measure the temperature in real-time and to transmit the current temperature to the password database 130 and/or the user device 120. In some embodiments, the real-time data source 140 may include the Internet. For example, the password database 130 and/or the user device 120 may query the real-time data source 140 to ascertain the real-time value for any number of different variables, including the date, the time, the temperature, or any other information. The real-time data source 140 may include API calls or references to different websites that may track various real-time variables. Alternatively or additionally, the real-time data source 140 may include and/or obtain information that may not be publicly available and/or determinable. For example, the real-time data source 140 may include information relative to lodging reservations, such as a number of guests that are expected on a particular date and/or a duration of a stay on a particular date.

In some embodiments, one or more of the user device 120, the password database 130, and the real-time data source 140 may be part of a single device. For example, the user device 120, the password database 130, and the real-time data source 140 may all be a part of a single device. Alternatively or additionally, the environment 100 may include other devices. For example, the environment 100 may also include an access device. In these and other embodiments, the user device 120 may be configured to generate or to allow a user to generate a password and the access device may be configured to allow a user to enter a password attempt. For example, the user device 120 may be a computer or a smart cellular telephone that may allow the user to create a dynamic password and the access device may be an electronic lock where a user enters the password to open a door.

A description of the operation of environment 100 follows. A user may use the user device 120 to generate a dynamic password. In some embodiments, the user may select particular dynamic password templates to create a dynamic password. After the creation of the dynamic password, the user device 120 may transmit the dynamic password, a user name (if applicable), and an indicator that the password is a dynamic password to the password database 130.

At a subsequent point in time, the user or another individual may attempt to engage in a secure action. To engage in the secure action, a user name (if applicable) and a password may be entered into the user device 120 and/or another device as a password attempt. The user device 120 and/or the other device may transmit the password attempt to the password database 130. The password database 130 may determine whether the password attempt corresponds to a dynamic password. For example, the password database 130 may determine the user name entered together with the password attempt corresponds to a dynamic password based on the indicator in the database. Alternatively, the password database 130 may only include a single password (e.g., when the password database 130 is associated with an electronic lock on a door) and the single password may include an indicator that the password is a dynamic password. In response to determining that the entered password attempt is a dynamic password, the password database 130 may obtain real-time information from the real-time data source 140 based on dynamic password templates in the dynamic password. The password database 130 may map real-time information into the dynamic password and then compare the dynamic password with the mapped data with the password attempt. In response to the password attempt matching the dynamic password with the mapped data, the password database 130, the user device 120, and/or another device may allow the performance of a secure transaction such as logging a user into a user account, unlocking a lock, opening a door, engaging in a transaction, etc.

Modifications, additions, or omissions may be made to FIG. 1 without departing from the scope of the present disclosure. For example, the environment 100 may include more or fewer elements than those illustrated and described in the present disclosure. Moreover, in some embodiments, the user device 120, the password database 130, and the real-time data source 140 may be one device. Alternatively or additionally, in some embodiments, the user device 120, the password database 130, and/or the real-time data source 140 and the operations discussed relative to the user device 120, the password database 130, and/or the real-time data source 140 may be distributed across different systems.

FIG. 2 illustrates an example password database 200. In some embodiments, the password database 200 may include multiple passwords together with the associated user names and indicators to indicate whether the password is a dynamic password. For example, the entries in the password database 200 may include a user name field 210, a password field 220, and a dynamic password indicator field 230. As depicted in FIG. 2, the password database 200 may include both dynamic passwords (as indicated by a "Y" in the dynamic password indicator field 230) and static passwords (as indicated by an "N" in the dynamic password indicator field 230). In these and other embodiments, dynamic password templates in the password field 220 are indicated with underlining. Each of the dynamic passwords in the password database 200 may include different dynamic password templates and different static characters. For example, one dynamic password may be "DDMM565712", where the dynamic password template is "DDMM", representing a two-digit number for the day of the month and a two-digit number for the month of the year. Other dynamic password templates in the dynamic passwords of the password database may include "NGNN", where NG represents a two-digit number for the number of guests registered for a stay and NN represents the number of nights for a stay, "YY", where YY is a two-digit number for the current year, "MI", where MI represents a two-digit number for the minutes of the current time, and "T", where T is the current temperature. In some embodiments, the password database 200 may not include a user name field 210. In these and other embodiments, the password database 200 may include a single password with a password field 220 and a dynamic password indicator field 230. For example, when the password database 200 is associated with an electronic lock, the password database 200 may include a single password and may not include a user name field 210.

Modifications, additions, or omissions may be made to FIG. 2 without departing from the scope of the present disclosure. For example, as discussed above, the password database 200 may include fewer fields or additional fields. For example, the password database 200 may not include a user name field 210. Alternatively or additionally, in some embodiments, the dynamic password indicator field 230 may not be a separate field but instead may be included as part of the password field 220. For example, one or more characters in a password may indicate that the password is a dynamic password and the absence of the one or more characters may indicate that the password is a static password.

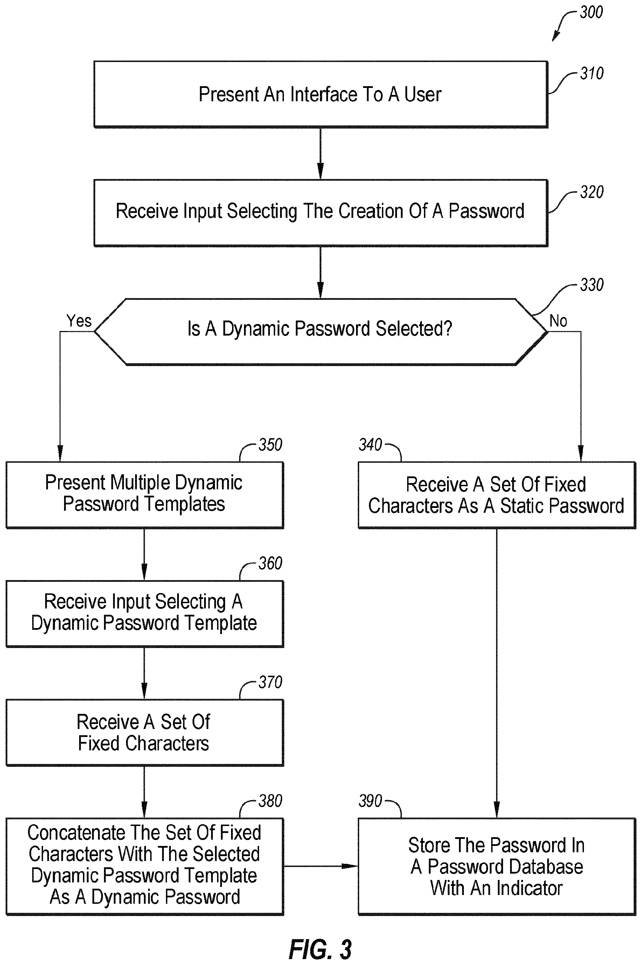

FIG. 3 is a flowchart of an example process 300 of generating static and dynamic passwords. The process 300 may be arranged in accordance with at least one embodiment described in the present disclosure. The process 300 may be performed, in whole or in part, in some embodiments, by a system and/or environment, such as the environment 100 and/or the computer system 602 of FIGS. 1 and 6, respectively. In these and other embodiments, the process 300 may be performed based on the execution of instructions stored on one or more non-transitory computer-readable media. Although illustrated as discrete blocks, various blocks may be divided into additional blocks, combined into fewer blocks, or eliminated, depending on the desired implementation.

The process 300 may begin at block 310, where an interface may be presented to a user. The interface may include multiple selectable fields, including fields indicating a desire to create a user name and/or a password. In block 320, input selecting the creation of a password may be received. For example, a user may use a mouse to click on a button to create a password. Alternatively or additionally, in some embodiments, a user may interact with a touch screen to touch a button to create a password. In some embodiments, in response to selecting to create a password, the user may further be presented with an option to select to create a dynamic password or a static password. In block 330, it may be determined whether the creation of a dynamic password was selected. If the user did not select to create a dynamic password ("No" at block 330), the process 300 may proceed to block 340. If the user selected to create a dynamic password ("Yes" at block 330), the process 300 may proceed to block 350.

At block 340, a set of fixed characters may be received as a static password. In some embodiments, the set of fixed characters may have restrictions on repetition within the set of characters and/or restrictions in relation to previous passwords. For example, in some embodiments, the set of fixed characters may be required to be different from the previous password and/or from multiple previous passwords. After block 340, the process 300 may proceed to block 390.

At block 350, multiple dynamic password templates may be presented. For example, the multiple dynamic password templates may each include a combination of one or more modules such as the current date, the current time, the day of the week, the current temperature, the number of guests registered for a room, the number of nights associated with a lodging reservation, etc. At block 360, input selecting one or more dynamic password templates may be received. At block 370, a set of fixed characters may be received. At block 380, the set of fixed characters may be concatenated with the selected dynamic password template as a dynamic password. For example, the set of fixed characters may be concatenated in front of the dynamic password template, in the back of the dynamic password template, and/or in between multiple dynamic password templates.

At block 390, the password may be stored in a password database with an indicator. For example, when the process 300 proceeds to block 390 from block 340, the static password may be stored in the password database with an indicator that the password is a static password and when the process 300 proceeds to block 390 from block 380, the dynamic password may be stored in the password database with an indicator that the password is a dynamic password.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the process 300 may include additional blocks or fewer blocks.

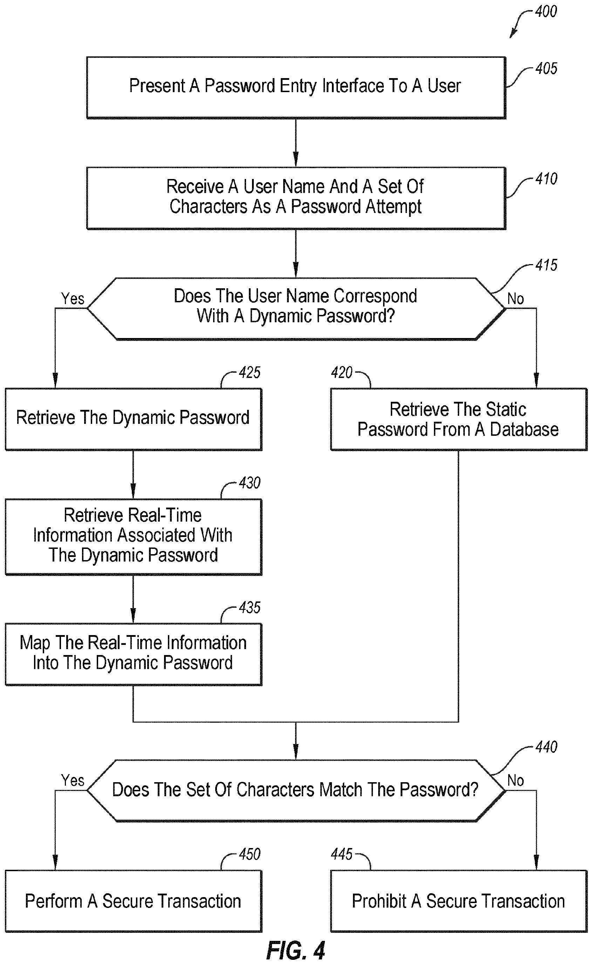

FIG. 4 is a flowchart of an example process 400 of validating static and dynamic passwords. The process 400 may be arranged in accordance with at least one embodiment described in the present disclosure. The process 400 may be performed, in whole or in part, in some embodiments, by a system and/or environment, such as the environment 100 and/or the computer system 602 of FIGS. 1 and 6, respectively. In these and other embodiments, the process 400 may be performed based on the execution of instructions stored on one or more non-transitory computer-readable media. Although illustrated as discrete blocks, various blocks may be divided into additional blocks, combined into fewer blocks, or eliminated, depending on the desired implementation.

The process 400 may begin at block 405, where a password entry interface may be presented to a user. The interface may include multiple fields, including a user name field and a password field. In some embodiments, the password entry interface may be provided by a password database (operating as a server) to a user device (e.g., via a website) such that the user device may present the password entry interface. In block 410, a user name and a set of characters may be received as a password attempt. The user name of the password attempt may be compared with user names in a password database. In block 415, it may be determined whether the user name corresponds with a dynamic password based on the password database. If the user name does not correspond with a dynamic password ("No" at block 415), the process 400 may proceed to block 420. If the user name does correspond with a dynamic password ("Yes" at block 415), the process 400 may proceed to block 425.

In block 420, the static password corresponding with the user name may be retrieved from the database.

In block 425, the dynamic password may be retrieved from the database. In block 430, real-time information associated with the dynamic password may be retrieved. For example, the real-time information may be retrieved from a real-time data source such as the real-time data source 140 of FIG. 1. In some embodiments, the real-time information may include a current time of day, a current day of the week, a current date, a current temperature, or other information. In block 435, the real-time information may be mapped into the dynamic password. For example, the real-time information may be mapped into the dynamic password template with which it corresponds. For example, if the dynamic password includes a dynamic password template of DWMI, where DW corresponds with a two-digit number for the current day of the week and MI corresponds with a two-digit number for the current time, and the current day is Friday and the current time is 3:58, 0558 may be mapped into the dynamic password in place of the dynamic password template DWMI

At block 440, it may be determined whether the set of characters matches the password. For example, when the password is a dynamic password, the set of characters received as a password attempt may be compared with the dynamic password with the mapped real-time information. Similarly, when the password is a static password, the set of characters received as a password attempt may be compared with the static password. If the set of characters does not match the password ("No" at block 440"), the process 400 may proceed to block 445. If the set of characters matches the password ("Yes" at block 440), the process 400 may proceed to block 450. At block 445, a secure transaction may be prohibited. For example, if the user was attempting to unlock a door by entering a password, the door may remain locked. If the user was attempting to log in to an account, the log in may fail. At block 450, a secure transaction may be performed. Continuing the above example, if the user was attempting to unlock the door, the door may be unlocked. If the user was attempting to log in to an account, the attempt may be successful.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the process 400 may include additional blocks or fewer blocks. For example, in some embodiments, the process 400 may not include a user name. In these and other embodiments, the process 400 may include determining whether a password corresponds with a dynamic password without the use of a user name. For example, in some embodiments, the process 400 may include determining whether a password corresponds with a dynamic password based on a hardware device being used to enter the password or based on a password database including a single password.

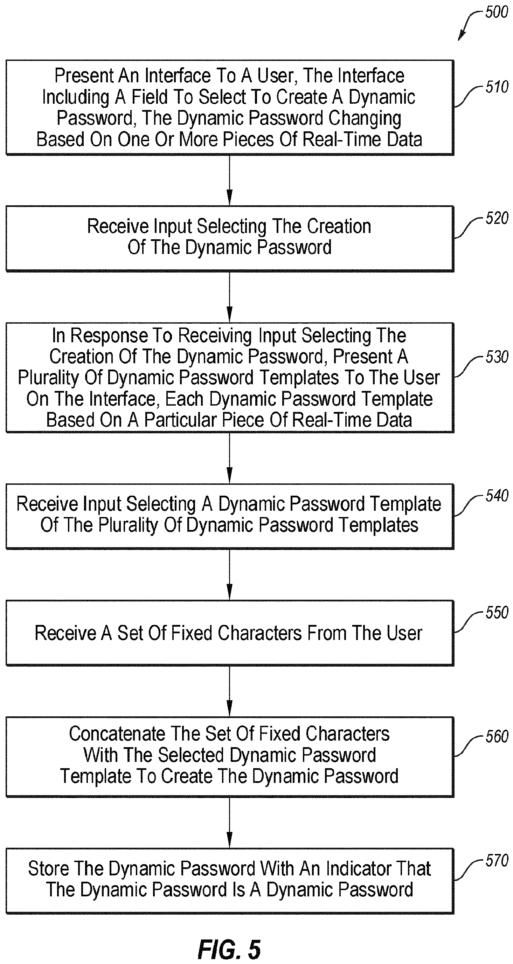

FIG. 5 is a flowchart of an example method of generating a dynamic password. The method 500 may be arranged in accordance with at least one embodiment described in the present disclosure. The method 500 may be performed, in whole or in part, in some embodiments, by a system and/or environment, such as the environment 100 and/or the computer system 602 of FIGS. 1 and 6, respectively. In these and other embodiments, the method 500 may be performed based on the execution of instructions stored on one or more non-transitory computer-readable media. Although illustrated as discrete blocks, various blocks may be divided into additional blocks, combined into fewer blocks, or eliminated, depending on the desired implementation.

The method may begin at block 510, where an interface may be presented to a user. The interface may include a field to select to create a dynamic password. The dynamic password may change based on one or more pieces of real-time data. In some embodiments, the pieces of real-time data may include a current time, a current date, a number of guests, a duration of a stay, or a current temperature. In block 520, input selecting the creation of the dynamic password may be received.

In block 530, a plurality of dynamic password templates may be presented to the user on the interface in response to receiving input selecting the creation of the dynamic password. Each dynamic password template may include a combination of one or more modules that may be based on a particular piece of real-time data. In some embodiments, the plurality of dynamic password templates may include numeric representations for days and months. In block 540, input selecting a dynamic password template of the plurality of dynamic password templates may be received.

In block 550, a set of fixed characters may be received from the user. In block 560, the set of fixed characters may be concatenated with the selected dynamic password template to create the dynamic password. In block 570, the dynamic password may be stored with an indicator that the dynamic password is a dynamic password. In some embodiments, the dynamic password may be stored in a password database. In these and other embodiments, the password database may include a plurality of dynamic passwords and a plurality of static passwords. Each static password in the plurality of static passwords may not changed based on real-time data.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the method 500 may include additional blocks or fewer blocks.

For example, in some embodiments, the method 500 may further include receiving a set of characters as a password attempt (e.g., via a user interface of a website). In these and other embodiments, the method 500 may also include determining, using the password database, whether the set of characters corresponds with the dynamic password. In these and other embodiments, the method 500 may further include obtaining real-time data associated with the selected dynamic password template in response to determining that the set of characters corresponds with the dynamic password. In these and other embodiments, the method 500 may also include mapping the real-time data into the selected dynamic password template in the dynamic password. In these and other embodiments, the method 500 may further include determining whether the set of characters matches the dynamic password with the mapped real-time data. In these and other embodiments, the method 500 may also include performing a secure transaction in response to determining the set of characters matches the dynamic password with the mapped real-time data. In some embodiments, the secure transaction may include unlocking a lock or gaining access to a network.

In some embodiments, the method 500 may further include presenting a password entry interface to the user. In these and other embodiments, the method 500 may also include prompting the user to enter the set of characters as the password prompt. In these and other embodiments, the method 500 may further include prompting the user to enter a user name. In these and other embodiments, the method 500 may also include receiving the user name. In these and other embodiments, determining whether the set of characters corresponds with the dynamic password may be based on the received user name.

FIG. 6 illustrates a block diagram of an example computing system 602, according to at least one embodiment of the present disclosure. The computing system 602 may be configured to implement or direct one or more operations associated with generating module-based dynamic passwords. The computing system 602 may include a processor 650, a memory 652, and a data storage 654. The processor 650, the memory 652, and the data storage 654 may be communicatively coupled.

In general, the processor 650 may include any suitable special-purpose or general-purpose computer, computing entity, or processing device including various computer hardware or software modules and may be configured to execute instructions stored on any applicable computer-readable storage media. For example, the processor 650 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 6, the processor 650 may include any number of processors configured to, individually or collectively, perform or direct performance of any number of operations described in the present disclosure. Additionally, one or more of the processors may be present on one or more different electronic devices, such as different servers.

In some embodiments, the processor 650 may be configured to interpret and/or execute program instructions and/or process data stored in the memory 652, the data storage 654, or the memory 652 and the data storage 654. In some embodiments, the processor 650 may fetch program instructions from the data storage 654 and load the program instructions in the memory 652. After the program instructions are loaded into memory 652, the processor 650 may execute the program instructions.

For example, in some embodiments, the processes 300 and 400 of FIGS. 3 and 4, respectively, and/or the method 500 of FIG. 5 may be included in the data storage 654 as program instructions. The processor 650 may fetch the program instructions of the methods from the data storage 654 and may load the program instructions of the methods in the memory 652. After the program instructions of the methods are loaded into memory 652, the processor 650 may execute the program instructions such that the computing system may implement the operations associated with the methods as directed by the instructions.

The memory 652 and the data storage 654 may include computer-readable storage media for carrying or having computer-executable instructions or data structures stored thereon. Such computer-readable storage media may include any available media that may be accessed by a general-purpose or special-purpose computer, such as the processor 650. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 650 to perform a certain operation or group of operations.

Modifications, additions, or omissions may be made to the computing system 602 without departing from the scope of the present disclosure. For example, in some embodiments, the computing system 602 may include any number of other components that may not be explicitly illustrated or described.

As indicated above, the embodiments described in the present disclosure may include the use of a special-purpose or general-purpose computer (e.g., the processor 650 of FIG. 6) including various computer hardware or software modules, as discussed in greater detail below. Further, as indicated above, embodiments described in the present disclosure may be implemented using computer-readable media (e.g., the memory 652 or data storage 654 of FIG. 6) for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the systems and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

The following statements are useful for understanding embodiments of the present invention:
A system comprising: one or more processors; a password database; and one or more computer-readable media configured to store instructions that in response to being executed by the one or more processors cause the system to perform operations, the operations comprising: providing an interface to a user device, the interface including a field to select to create a dynamic password configured to automatically change based on one or more pieces of real-time data; receiving, from the user device, input selecting to create the dynamic password; in response to receiving the input to create the dynamic password, providing a plurality of dynamic password templates to the user device via the interface, each dynamic password template including a combination of one or more modules that are each based on a corresponding particular piece of real-time data and that each indicate the corresponding real-time information; receiving, from the user device, input selecting a dynamic password template of the plurality of dynamic password templates; receiving, from the user device, a set of fixed characters; and obtaining a combination of the set of fixed characters with the selected dynamic password template as the dynamic password; and storing the dynamic password with an indicator that the dynamic password is a dynamic password.

The system of statement A1, wherein the operations further comprise: receiving a set of characters as a password attempt; determining whether the set of characters corresponds with the dynamic password; in response to determining that the set of characters corresponds with the dynamic password, obtaining real-time data associated with the selected dynamic password template; mapping the real-time data into the selected dynamic password template in the dynamic password; determining whether the set of characters matches the dynamic password with the mapped real-time data; and in response to determining the set of characters matches the dynamic password with the mapped real-time data, performing a secure transaction.

The system of statement A2, wherein the operations further comprise: providing a password entry interface to the user; prompting, via the password entry interface, the user to enter the set of characters as the password attempt; prompting, via the password entry interface, the user to enter a user name; and receiving the user name, wherein the determining whether the set of characters corresponds with the dynamic password is based on the received user name.

The system of statement A2 or A3, wherein the secure transaction includes unlocking a lock or gaining access to a network.

The system of any preceding statement, wherein the password database includes a plurality of dynamic passwords and a plurality of static passwords, each static password in the plurality of static passwords not changing based on real-time data.

The system of any preceding statement, wherein the pieces of real-time data include a current time, a current date, a number of guests, a duration of a stay, or a current temperature.

The system of any preceding statement, wherein the set of dynamic characters correspond to numeric representations for days and months.

## Claims

1. A method comprising:
providing an interface to a user device, the interface including a field to select to create a dynamic password configured to automatically change based on one or more pieces of real-time data;
receiving, from the user device, input selecting to create the dynamic password;
in response to receiving the input to create the dynamic password, providing a plurality of dynamic password templates to the user device via the interface, each dynamic password template including a combination of one or more modules that are each based on a corresponding particular piece of real-time data and that each indicate the corresponding real-time information;
receiving, from the user device, input selecting a dynamic password template of the plurality of dynamic password templates;
receiving, from the user device, a set of fixed characters; and
obtaining a combination of the set of fixed characters with the selected dynamic password template as the dynamic password; and
storing the dynamic password with an indicator that the dynamic password is a dynamic password.

2. The method of claim 1, further comprising:
receiving a set of characters as a password attempt;
determining whether the set of characters corresponds with the dynamic password;
in response to determining that the set of characters corresponds with the dynamic password, obtaining real-time data associated with the selected dynamic password template;
mapping the real-time data into the selected dynamic password template in the dynamic password;
determining whether the set of characters matches the dynamic password with the mapped real-time data; and
in response to determining the set of characters matches the dynamic password with the mapped real-time data, performing a secure transaction.

3. The method of claim 2, further comprising:
providing a password entry interface to the user;
prompting, via the password entry interface, the user to enter the set of characters as the password attempt;
prompting, via the password entry interface, the user to enter a user name; and
receiving the user name,
wherein the determining whether the set of characters corresponds with the dynamic password is based on the received user name.

4. The method of claim 2 or claim 3, wherein the secure transaction includes unlocking a lock or gaining access to a network.

5. The method of any preceding claim, wherein the dynamic password is stored in a password database, the password database including a plurality of dynamic passwords and a plurality of static passwords, each static password in the plurality of static passwords not changing based on real-time data.

6. The method of any preceding claim, wherein the pieces of real-time data include a current time, a current date, a number of guests, a duration of a stay, or a current temperature.

7. The method of any preceding claim, wherein the plurality of dynamic password templates includes numeric representations for days and months.

8. A non-transitory computer-readable medium having encoded therein programming code executable by a processor to perform operations comprising:
presenting an interface to a user, the interface including a field to select to create a dynamic password, the dynamic password changing based on one or more pieces of real-time data;
receiving input selecting to create the dynamic password;
receiving a set of dynamic characters from the user, the set of dynamic characters being associated with a particular piece of real-time data;
receiving a set of fixed characters from the user; and
combining the set of fixed characters with the set of dynamic characters to create a dynamic password.

9. The non-transitory computer-readable medium of claim 8, wherein the operations further comprise:
receiving a set of characters as a password attempt;
determining whether the set of characters corresponds with the dynamic password;
in response to determining that the set of characters corresponds with the dynamic password, obtaining real-time data associated with the set of dynamic characters;
mapping the real-time data into the set of dynamic characters in the dynamic password;
determining whether the set of characters matches the dynamic password with the mapped real-time data; and
in response to determining the set of characters matches the dynamic password with the mapped real-time data, performing a secure transaction.

10. The non-transitory computer-readable medium of claim 9, wherein the operations further comprise:
presenting a password entry interface to the user;
prompting the user to enter the set of characters as the password attempt;
prompting the user to enter a user name; and
receiving the user name,
wherein the determining whether the set of characters corresponds with the dynamic password is based on the received user name.

11. The non-transitory computer-readable medium of claim 9 or 10, wherein the secure transaction includes unlocking a lock or gaining access to a network.

12. The non-transitory computer-readable medium of any of claims 8 to 11, wherein the dynamic password is stored in a password database, the password database including a plurality of dynamic passwords and a plurality of static passwords, each static password in the plurality of static passwords not changing based on real-time data.

13. The non-transitory computer-readable medium of any of claims 8 to 12, wherein the pieces of real-time data include a current time, a current date, a number of guests, a duration of a stay, or a current temperature.

14. The non-transitory computer-readable medium of any of claims 8 to 13, wherein the set of dynamic characters correspond to numeric representations for days and months.

15. A system comprising:
one or more processors;
a password database; and
one or more computer-readable media configured to store instructions that in response to being executed by the one or more processors cause the system to perform operations, the operations comprising:
providing an interface to a user device, the interface including a field to select to create a dynamic password configured to automatically change based on one or more pieces of real-time data;
receiving, from the user device, input selecting to create the dynamic password;
in response to receiving the input to create the dynamic password, providing a plurality of dynamic password templates to the user device via the interface, each dynamic password template including a combination of one or more modules that are each based on a corresponding particular piece of real-time data and that each indicate the corresponding real-time information;
receiving, from the user device, input selecting a dynamic password template of the plurality of dynamic password templates;
receiving, from the user device, a set of fixed characters; and
obtaining a combination of the set of fixed characters with the selected dynamic password template as the dynamic password; and
storing the dynamic password with an indicator that the dynamic password is a dynamic password.

## Amended claims

### Amended claims in accordance with Rule 137(2) EPC.

1. A method comprising:
providing an interface to a user device (120), the interface including a field to select to create a dynamic password configured to automatically change based on one or more pieces of real-time data;
receiving, from the user device (120), input selecting to create the dynamic password;
receiving, from the user device (120), input selecting a set of dynamic characters, the set of dynamic characters being associated with a particular piece of real-time data and each dynamic character being arranged in a customized arrangement as indicated by the user;
receiving, from the user device (120), a set of fixed characters; and
obtaining a combination of the set of fixed characters with the dynamic characters arranged according to the customized arrangement as the dynamic password; and
storing the dynamic password with an indicator that the dynamic password is a dynamic password.

2. The method of claim 1, further comprising:
receiving a set of characters as a password attempt;
determining whether the set of characters corresponds with the dynamic password;
in response to determining that the set of characters corresponds with the dynamic password, obtaining real-time data associated with the set of dynamic characters;
mapping the real-time data into the set of dynamic characters in the dynamic password;
determining whether the set of characters matches the dynamic password with the mapped real-time data; and
in response to determining the set of characters matches the dynamic password with the mapped real-time data, performing a secure transaction.

3. The method of claim 2, further comprising:
providing a password entry interface to the user;
prompting, via the password entry interface, the user to enter the set of characters as the password attempt;
prompting, via the password entry interface, the user to enter a user name; and
receiving the user name,
wherein the determining whether the set of characters corresponds with the dynamic password is based on the received user name.

4. The method of claim 2 or claim 3, wherein the secure transaction includes unlocking a lock or gaining access to a network (110).

5. The method of any preceding claim, wherein the dynamic password is stored in a password database (130), the password database (130) including a plurality of dynamic passwords and a plurality of static passwords, each static password in the plurality of static passwords not changing based on real-time data.

6. The method of any preceding claim, wherein the pieces of real-time data include a current time, a current date, a number of guests, a duration of a stay, or a current temperature.

7. The method of any preceding claim, wherein the set of dynamic characters correspond to numeric representations for days and months.

8. A non-transitory computer-readable medium (120; 602) having encoded therein programming code executable by a processor (650) to perform operations comprising:
presenting an interface to a user, the interface including a field to select to create a dynamic password, the dynamic password changing based on one or more pieces of real-time data;
receiving input selecting to create the dynamic password;
receiving a set of dynamic characters from the user, the set of dynamic characters being associated with a particular piece of real-time data and each dynamic character being arranged in a customized arrangement as indicated by the user;
receiving a set of fixed characters from the user; and
combining the set of fixed characters with the set of dynamic characters as arranged in the customized arrangement to create a dynamic password.

9. The non-transitory computer-readable medium (120; 602) of claim 8, wherein the operations further comprise:
receiving a set of characters as a password attempt;
determining whether the set of characters corresponds with the dynamic password;
in response to determining that the set of characters corresponds with the dynamic password, obtaining real-time data associated with the set of dynamic characters;
mapping the real-time data into the set of dynamic characters in the dynamic password;
determining whether the set of characters matches the dynamic password with the mapped real-time data; and
in response to determining the set of characters matches the dynamic password with the mapped real-time data, performing a secure transaction.

10. The non-transitory computer-readable medium (120; 602) of claim 9, wherein the operations further comprise:
presenting a password entry interface to the user;
prompting the user to enter the set of characters as the password attempt;
prompting the user to enter a user name; and
receiving the user name,
wherein the determining whether the set of characters corresponds with the dynamic password is based on the received user name.

11. The non-transitory computer-readable medium (120; 602) of claim 9 or 10, wherein the secure transaction includes unlocking a lock or gaining access to a network (110).

12. The non-transitory computer-readable medium (120; 602) of any of claims 8 to 11, wherein the dynamic password is stored in a password database (130), the password database (130) including a plurality of dynamic passwords and a plurality of static passwords, each static password in the plurality of static passwords not changing based on real-time data.

13. The non-transitory computer-readable medium (120; 602) of any of claims 8 to 12, wherein the pieces of real-time data include a current time, a current date, a number of guests, a duration of a stay, or a current temperature.

14. The non-transitory computer-readable medium of any of claims 8 to 13, wherein the set of dynamic characters correspond to numeric representations for days and months.

15. A system (100) comprising:
one or more processors (650);
a password database (130); and
one or more computer-readable media configured (602) to store instructions that in response to being executed by the one or more processors (650) cause the system to perform operations, the operations comprising:
providing an interface to a user device (120), the interface including a field to select to create a dynamic password configured to automatically change based on one or more pieces of real-time data;
receiving, from the user device (120), input selecting to create the dynamic password;
receiving, from the user device (120), input selecting a set of dynamic characters, the set of dynamic characters being associated with a particular piece of real-time data and each dynamic character being arranged in a customized arrangement as indicated by the user;
receiving, from the user device (120), a set of fixed characters; and
obtaining a combination of the set of fixed characters with the dynamic characters arranged according to the customized arrangement as the dynamic password; and
storing the dynamic password with an indicator that the dynamic password is a dynamic password.
